# EUROPEAN PATENT APPLICATION

(11) **EP 4 141 331 A1**
(43) Date of publication of application: **01.03.2023**
(21) Application number: 21193273.6
(22) Date of filing: 26.08.2021
(51) Int. Cl.: F24D 11/00, F24D 19/10

(54) **HEATER FLOW PATH FOR A THERMAL ENERGY STORAGE SYSTEM**

(71) Applicant: Siemens Gamesa Renewable Energy GmbH & Co. KG, 20097 Hamburg (DE)
(72) Inventor: Gerhard, Maike, 22145 Hamburg (DE); Huck, Daniel, 22309 Hamburg (DE)
(74) Representative: SGRE-Association

(57) **Abstract**

It is described a heater flow path for a thermal energy storage system (100), the heater flow path comprising: a heater system (101) adapted to heat a heat transfer fluid; an on-off valve system (104); and a continuously adjustable valve system (105), wherein the on-off valve system and the continuously adjustable valve system are configured to adapt a throughput of the transfer fluid through the heater system and are arranged, according to a (intended) flow direction (106) of the transfer fluid, both upstream (107), both downstream (108) or one upstream and the other downstream of the heater system (101).

## Description

### Field of invention

The present invention relates to a heater flow path for a thermal energy storage system, further relates to a thermal energy storage system and still further refers to a method of manufacturing a heater flow path for a thermal energy storage system.

### Art Background

In an electro-thermal energy storage system, energy may be stored which was for example generated by an electrical heater system from electric energy for example generated by a renewable energy generation system, such as a solar plant or a wind park or so forth.

For charging a heat storage, electrical energy is utilized by a heater system to generate heat energy and to heat a heat transfer fluid. The heat transfer fluid is then guided through a heat storage, where the heat energy of the heat transfer fluid is at least partly transferred to heat storage material comprised in the heat storage. During a discharge operation, relatively cold transfer fluid is guided through the heat storage comprising heat storage material. The transfer fluid then acquires some of the heat energy from the material comprised in the heat storage and the transfer fluid heated up may be supplied to a heat consumer which in turn utilizes the heat energy for any downstream processes, for example to again transform the heat energy back to for example electrical energy or mechanical energy. During the discharge operation, the transfer fluid guided through an outlet from the heat storage may have a temperature which may be too high for the heat consumer. Therefore, the heat transfer fluid heated by the heat storage may be merged with a portion of heat transfer fluid which has a lower temperature, for example by supplying the heat transfer fluid flown through the heater flow path.

Thus, in an electro-thermal energy storage (ETES) system, the flow path through the heater may serve two purposes. When the storage system is charged, i.e. when the heat storage is receiving heated transfer fluid to heat up the material comprised in the heat storage, the heat transfer fluid (HTF) is heated up in the heater system and is then guided into the heat storage, where it transfers portions of its thermal energy to the storage material.

During discharge, the same flow path may serve as a bypass line for the storage. While the majority of the heat transfer fluid may flow through the heat storage during discharging and may absorb the thermal energy stored therein, a certain mass flow of the heat transfer fluid may be guided through the bypass line (also referred to as a heater flow path in the present application) (therefore it stays cold) and is merged with the other heat transfer fluid stream downstream of the heat storage.

By modifying the ratio of the heat transfer fluid flowing through the heat storage and through the bypass line (i.e. heater flow path), the temperature of the heat transfer fluid upon merging may be controlled to be appropriate for the respective heat consumer arranged downstream. The temperature of the heat transfer fluid after mixing may be adjusted according to the requirements of the heat consumer of the system, e.g. a heat recovery steam generator (HRSG).

The heat transfer fluid mass flow through the heater flow path (bypass line) may depend exclusively on which of the two modes is active, i.e. the charging mode or the discharging mode, however the heat transfer fluid mass flow may be controlled in both modes and may not necessarily be constant. In the charging operation mode, the bypass line needs to accommodate the entire HTF mass flow, requiring large duct work/damper sizes or valve sizes. In the discharging operational mode, however, only a small part of the total mass flow may pass through the heater flow path (bypass line).

Conventionally, it has been very challenging to control the bypass heat transfer fluid mass flow during the discharge in a precise manner. This is, because on the one hand, the magnitude of the bypass mass flow in general is far below the design flow of the heater flow path and on the other hand, this small mass flow may still need to be adjustable precisely in order to meet the required temperature of the heat transfer fluid upon merging. Occasionally, during discharging, the bypass line may be needed to be closed completely when the temperature of the transfer fluid leaving the heat storage equals or is even lower than the temperature as required by the heat consumer. This may be the case especially towards the end of a full discharge run, i.e. after a considerable time the heat storage has been operated during a discharge operation so that the temperature of the material within the heat storage may be relatively low. Any amount of bypass mass flow would negatively influence the operation of the heat consumer n these conditions.

Conventionally, a heater flow path may have been equipped with two control dampers, one upstream and one downstream of the heater unit. During a conventional operation it has been observed that it is difficult to adjust the bypass flow of i.e. the conventional heater flow path with these two control dampers in such a way that the desired temperature of the merged heat transfer fluid (merged as a mixture of heat transfer fluid output by the heat storage and heat transfer fluid passed through the bypass line) is obtained. Often, the temperature of the merged HTF has been observed to exceed the target temperature of the downstream heat consumer system, since the bypass mass flow was too low or it would fall below the target temperature if the bypass mass flow is too high. Precision of the control dampers has not been sufficient to set the exact HTF bypass flow that would be needed in a smooth and replicable and reliable manner.

This problem is associated with some of the problems described above: The control dampers may have to be in the size of the ducts which are designed for the high carrying or high charging mass flow during the charging operation. However, dampers of this relatively large size may make it difficult to achieve a fine-tuned flow control which may be necessary during the discharging operation.

Thus, there may be a need for a heater flow path for an electro-thermal energy storage system, there may be a need for an electro-thermal energy storage system and there may also be a need for a method of manufacturing a heater flow path for an electro-thermal energy storage system, wherein the properties of the heat transfer fluid, i.e. for example temperature and/or mass flow, can be accurately be adjusted, in particular during a discharging operation, in order to enable in an improved manner a downstream consumer system which may have particular temperature and/or mass flow requirements of a heat transfer fluid.

In particular, there may be a need for a heater flow path for an electro-thermal energy storage system, wherein operation of the electro-thermal energy storage system may be improved, in particular during a discharging operation, in particular also enabling or ensuring that the temperature output which is then made available for a consumer system matches the requirements of the consumer system and may therefore be adjusted in an accurate manner. Furthermore, there may be a need for a heater flow path of the respective electro-thermal energy storage system, wherein mass flow and/or temperature of a transfer fluid output for a consumer system may be adjusted in an accurate and improved manner.

### Summary of the Invention

This need may be met by the subject matter according to the independent claims. Advantageous embodiments of the present invention are described by the dependent claims.

According to an embodiment of the present invention it is provided a heater flow path for an (e.g. electro-) thermal energy storage system, the heater flow path comprising an, in particular electrical, heater system adapted to heat a heat transfer fluid; an on-off valve system; and a continuously adjustable valve system, wherein the on-off valve system and the continuously adjustable valve system are configured to adapt a throughput of the transfer fluid through the heater system and are arranged, according to a (intended) flow direction of the transfer fluid, both upstream, both downstream or one upstream and the other downstream of the heater system.

The heater system may be or comprises an electrical heater system and/or a heat transfer system (using waste heat) and/or any other heat source and/or heat torch and/or heat pump.

The (e.g. electro-) thermal energy storage system may comprise a heat storage for storing heat energy by transfer of heat from a heat transfer fluid, such as air for example. Further, the electro-thermal energy storage system may comprise the heater flow path comprising the heater system. The heater system may comprise one or more heater units, for example connected in parallel and may be adapted to heat the heat transfer fluid during a charging operation. A heater system outlet may be connected to a heat storage discharge outlet. The heat storage discharge outlet may be the outlet of the heat storage during the discharging operation. In particular, the heat storage may comprise a heat storage discharge inlet at an opposite end of the heat storage discharge outlet. In particular, the heat storage discharge inlet may correspond to a heat storage charging outlet. Further, the heat storage discharging outlet may correspond to a heat storage charging inlet. Thus, during discharging and charging, the flow direction of the heat transfer fluid may be reversed which runs through the heat storage.

However, the flow direction of the heat transfer fluid during the charging operation and the discharging operation may be the same through the heater system. Thus, the heater system may comprise an outlet which is the outlet of the heater system during the charging operation as well as is the outlet of the heater system during the discharging operation. Further, the heater system may comprise a (single) inlet, which is the inlet of the heater system during the charging operation as well as is the inlet of the heater system during the discharging operation.

The fluid transportation actuator may for example comprise a blower or a compressor or a fan or a combination of the same. Also the flow direction through the fluid transportation actuator may be the same during the charging operation as well as during the discharging operation. The fluid transportation actuator may therefore be arranged upstream the heater system. The fluid transportation actuator may comprises a blower as described e.g. in EP3308090B8.

The heat consumer flow path may be arranged downstream of the heat storage and also downstream of the heater system during the discharging operation. During a charging operation, the heat consumer flow path may be idle, i.e. no heat transfer fluid may flow through the heat consumer flow path. The heat transfer fluid as merged downstream the T-pipe junction is merged from heat transfer fluid output by the heat storage and transfer fluid flown through the heater flow path (bypass line) and may be guided into the heat consumer flow path which may comprise a heat consumer. At the T-pipe junction, three pipe sections may be joined, one being connected to the heat storage discharge outlet, another being connected to the outlet of the heater system and still another leading to the heat consumer.

Thus, the heat transfer fluid coming from the heat storage discharge outlet as well as the heat transfer fluid coming from the outlet of the heater system may be merged at the T-pipe junction and guided to a pipe section being connected with an inlet of the heat consumer and is therefore part of the heat consumer flow path.

An outlet of the heat consumer may be connected to the inlet of the fluid transportation actuator.

The electro-thermal energy storage system may comprise a number of valves which enable to selectively set the electro-thermal energy storage system in the charging operational mode and in the discharging operational mode. Those valves or dampers may be present but will not be described in detail. Only the valves or dampers of the heater flow path will be described in detail below.

The heater flow path is adapted to be utilized in an electro-thermal energy storage system, for example as has been briefly described above. The heater flow path may for example be implemented by at least one (e.g. electrical) heater system and pipe sections connected to the heater system. The on-off valve system and the continuously adjustable valve system may be arranged in the pipe sections connected to the electrical heater system.

In case of an electrical heater system, the electrical heater system may comprise at least one electrical heating unit or may comprise two or more electrical heating units which may for example be arranged in series or in particular arranged in parallel to each other. The flow direction of the transfer fluid may be a single uniquely defined flow direction which is applicable during the charging operation as well as the discharging operation. In the charging mode the temperature at the heater inlet is lower than at the heater outlet.

The heater flow path may comprise one or more on-off valve systems and/or may comprise one or more continuously adjustable valve systems. Furthermore, the on-off valve system may comprise one or more on-off valves and/or the continuously adjustable valve system may comprise one or more continuously adjustable valves.

In contrast to the continuously adjustable valve system, the on-off valve system may not be enabled to continuously adjust a (amount of or size of or mass of or rate of) flow-through through the heat transfer system. However, the on-off valve system may be superior to the continuously adjustable valve system regarding sealing properties. The on-off valve system may for example provide an improved sealing in the on-state and/or the off-state.

One or both of the on-off valve system and the continuously adjustable valve system may comprise one or more setting motors which may however be configured for different operation times. The on-off valve system may comprise one or more motors which are designed for occasional operation, such that the idle times of those motors may be designed to be relatively long. The one or more motors of the on-off valve system may not be configured or designed for continuous operation. In contrast, the one or more motors of the continuously adjustable valve system may be configured or designed for high duty times or low idle times.

According to embodiments of the present invention, the on-off valve system may be arranged downstream of the heater system. Thereby, the specifications "upstream" and "downstream" may refer or relate to the flow direction of the heat transfer fluid through the heater system which may be the same during the charging operation as well as during the discharging operation. Since the flow direction of the heat transfer fluid is the same during the charging operation and the discharging operation (at least through the heater system), the heater system may be characterized as having an inlet (at an upstream end) and an outlet (at a downstream end). When the on-off valve system is arranged downstream of the heater system, transfer fluid being output by the heater system (during a discharging operation or a charging operation) therefore, runs through the on-off valve system or at least runs towards the on-off valve system (depending on whether the on-off valve system is in an open state or in a closed state). It may be advantageous to arrange the on-off valve system downstream of the heater system, since the on-off valve system may typically achieve higher tightness criteria, thus less leakage.

It may be better to have as many of the dampers in the cold-section of the system due to cost and potential material limits (with regards to sealing materials). It may be advantageous to have a damper at the heater outlet (hot-section) in order to more effectively isolate the heaters (which may be needed at the end of discharge). Having the shut-off damper on the heater outlet side may provide better isolation potential (control dampers at the inlet, shutoff damper at the outlet).

The continuously adjustable valve system may be arranged upstream of the heater system, in particular while the on-off valve system is arranged downstream of the heater system. When the continuously adjustable valve system is arranged upstream of the heater system, it may not be exposed to relatively high temperature transfer fluid during a charging operation, thereby prohibiting damage or wear of the continuously adjustable valve system.

According to an embodiment of the present invention, the heater system comprises plural (e.g. electrical) heater units arranged in plural parallel heater unit flow paths, wherein the continuously adjustable valve system comprises plural continuously adjustable valves arranged in the plural heater unit flow paths, in particular upstream of the respective heater units.

The (e.g. electrical) heater units may be same or different (e.g. electrical) heater units and may each e.g. be configured for converting electrical power into heat power, in order to heat the transfer fluid. The plural parallel heater unit flow paths may be parallel in the sense that any transfer fluid output from for example a fluid transportation actuator is distributed to equal or different amounts to the plural parallel heater unit flow paths. End sections of the plural heater unit flow paths may be joined or may be joinable, for example via one or more T-pipe junctions to a heat storage discharge outlet pipe section, in order to merge the transfer fluid flown through all of the plural parallel heater unit flow paths with the transfer fluid as output from the heat storage during a discharging operation. In embodiments of the present invention, each of the electrical heater units may comprise series-connected heater unit portions, for example.

When plural parallel heater unit flow paths are provided, the capacity or heating power of the heater system may be increased. Each of the heater unit flow paths may comprise a continuously adjustable valve arranged in particular upstream of the respective heater unit. Thereby, capacity of the heater system may be increased, while adjustability regarding flow rate and/or temperature may be ensured according to the particular requirements.

According to an embodiment of the present invention, the on-off valve system is settable exclusively into either an off-state corresponding to a minimal projection area of a flow passage or an on-state corresponding to a maximal projection area of a flow passage, the on-off valve system in particular comprising at least one valve flap that can be adjusted into two different angle settings relative to the flow direction and/or can be adjusted in two different lateral positions relative to the flow direction, in order to selectively achieve an open or a closed flow projection area. The valve flap may in particular be adjusted into two different angle settings relative to the flow direction, in particular substantially to 90° and to substantially 0° relative to a flow direction of the heat transfer fluid. The valve flap may thus be adjustable regarding orientation and/or (lateral) position into two settings, to define an open flow through area size for the transfer fluid.

According to an embodiment of the present invention, the continuously adjustable valve system allows to continuously alter a size of a projection area of a flow passage for the transfer fluid, the continuously adjustable valve system in particular comprising at least one valve flap that can be continuously adjusted regarding orientation and/or (lateral) position, to achieve a flow projection area adjustable substantially to any value between substantially 0% and substantially 100%. The valve flap may in particular continuously be adjusted regarding orientation between substantially 90° and substantially 0° relative to a flow direction of the heat transfer fluid. The valve flap may be continuously adjustable regarding orientation and/or (lateral) position into more than two (e.g. 10 to 100 or even more) settings, to define an open flow through area size for the transfer fluid.

The on-off valve system or a respective on-off valve may also be referred to as a shut-off damper or a shut-off valve and the continuously adjustable valve system or the continuously adjustable valve may be also referred to as control damper within the context of the present application. The control dampers and the shut-off dampers are different in structural configuration. The control dampers may be designed for a continuous adaption of the size of the projection area of the flow passage for the transfer fluid. In particular, a valve actuator of a control damper may be operated very regularly. On the other hand, the valve seals of a control damper according to an embodiment of the present invention may be constructed in a relatively simple manner as there generally is no need for an absolute closure of the valve comprised in the control damper. On the contrary, the shut-off damper may be designed for occasional operation and as a result their actuators may be constructed relatively simple but may have a switch-off time which is required to be relatively long. The seals of the shut-off damper may be designed to reduce the valve leakage to a minimum and may provide a better sealing characteristic than the seals of the control damper. The control dampers and the shut-off damper may have different focus and capability regarding the functionality, in particular operation time. Therefore, the shut-off damper may have better sealing property compared to the control damper.

Utilizing at least one shut-off damper and at least one control damper according to embodiments of the present invention may therefore combine the advantages of two types of dampers or two types of valve systems in an improved manner. The present invention provides multiple embodiments of how to combine the control damper and the shut-off damper.

According to an embodiment of the present invention, the heater flow path further comprises a control system, adapted to control the on-off valve system and/or the continuously adjustable valve system in different manners during a charging operation and a discharging operation.

The control system may be configured as a central control system or may be configured as distributed control system in which to each (or some) of the valves, a control portion is associated and communicatively connected. The control system may receive and supply signals, in particular measurement signals or setting signals and/or control signals from and to the respective valve systems. The control signals or measurement signals may comprise wireless signals and/or wire based electrical signals and/or optical signals. The control system may be adapted to control further valves and/or sensor elements and/or actuators beyond the on-off valve system and the continuously adaptable valve system which components may be located at different positions within an electro-thermal energy storage system.

According to an embodiment of the present invention, the heater flow path further comprises a flow sensor system, adapted to measure a transfer fluid flow value, in particular arranged downstream of the continuously adjustable valve system and/or upstream of the heater system.

The flow sensor system may in particular be employed during a charging operation. Thereby, in particular, when the heater system comprises plural heater units connected in parallel, for each of the respective heater unit flow paths, a flow sensor may be installed in order to measure the flow-through of the heat transfer fluid through the respective heater unit flow path. The control system may also receive reference flow values for each of the respective heater flow paths and may control the respective continuously adjustable valve which is comprised within the respective heater unit flow path in order to adjust the actual mass flow value. The reference mass flow may for example be set based on a capacity of the respective heater unit or the reference mass flow may be set to equal values for each of the different heater unit flow paths.

According to an embodiment of the present invention, the control system is adapted, during a charging operation to set the on-off valve system to an on-state; and/or to adjust the continuously adjustable valve system to a maximal throughput; or to adjust the continuously adjustable valve system based on, in particular a difference of, at least one measured transfer fluid flow value and at least one transfer fluid flow reference value.

During the charging operation, the transfer fluid output by the on-off valve system may entirely be supplied to the heat storage. In this case, the on-off valve system may be set to an on-state for maximal mass flow-through of the transfer fluid through the on-off valve system. The (mass) flow rate may exclusively be adjusted by the continuously adjustable valve system, and may comprise plural continuously adjustable valves in plural (e.g. parallel) heater unit flow paths for example. Depending on the requirements, the continuously adjustable valve system may either be set or adjusted to a maximal throughput (maximal projection area of the open flow passage) or may be set based on at least one transfer fluid flow reference value and the respective measured transfer fluid flow value. Thereby, operation during charging may be improved.

According to an embodiment of the present invention, the heater flow path further comprises a heat storage discharge flow path, arrangeable or arranged downstream, according to a flow direction of the transfer fluid during a discharging operation, of a heat storage; a T-pipe junction, arranged downstream of the heater system and downstream of the on-off valve system and connecting a downstream end of the heater flow path to the heat storage discharge flow path; a temperature sensor system, adapted to measure a transfer fluid temperature value, in particular arranged downstream the T-pipe junction.

At the T-pipe junction, an end of the heat storage discharge flow path, a downstream end of the heater flow path and a first end of a consumer flow path may be connected to each other. The T-pipe junction may enable to merge or mix transfer fluid as output from the heat storage with transfer fluid as flown through the heater system, during a discharging operation in order to obtain mixed transfer fluid having a lower temperature than the transfer fluid as output by the heat storage. The mixed transfer fluid may then be guided into the heat consumer flow path comprising at least one heat consumer. When the temperature sensor is provided, advantageously, the temperature of the transfer fluid as guided towards the heat consumer flow path may be controlled, in order to adapt the temperature of the transfer fluid to a target temperature the heat consumer is designed to receive.

According to an embodiment of the present invention, the control system is adapted, during a discharging operation to set the on-off valve system into an on-state or an off-state, in particular depending on a difference between a measured transfer fluid temperature value and a transfer fluid temperature reference value; and/or to adjust the continuously adjustable valve system based on, in particular a difference of, a measured transfer fluid temperature value and a transfer fluid temperature reference value.

The on-off valve system may for example be set in an on-state in the case, when the temperature of the transfer fluid as output by the heat storage is above a target temperature of the heat consumer. The continuously adjustable valve system is then adjusted regarding its flow-through capacity (i.e. flow rate of the transfer fluid passing through the continuously adjustable valve system) taking into account the measured transfer fluid temperature value and the transfer fluid temperature reference value. Thereby, adjustment of the transfer fluid temperature to the transfer fluid temperature reference value may be improved. In particular, the temperature sensor system may comprise only a (single) temperature sensor installed within a consumer flow path which guides the mixed transfer fluid mixed by the transfer fluid output from the heat storage and the transfer fluid flown through the heater flow path, in particular during a discharging operation.

According to an embodiment of the present invention, if the heater system comprises plural electrical heater units arranged in plural parallel heater unit flow paths and the continuously adjustable valve system comprises plural continuously adjustable valves arranged in the plural heater unit flow paths, in particular upstream of the respective heater units, the control system is adapted to set the plural continuously adjustable valves into different states or same states to achieve a different or same flow through of the heat transfer fluid through the plural heater unit flow paths. Thereby, control may be improved and capacity of the system may be increased.

According to an embodiment of the present invention, the heater flow path further comprises a fine tuning continuously adjustable valve system arranged in parallel to the continuously adjustable valve system, and in particular arranged upstream of the heater system, the fine tuning continuously adjustable valve system having a smaller maximal flow through capacity than the continuously adjustable valve system, the fine tuning continuously adjustable valve system in particular having a maximal flow through capacity between e.g. 0% and 10% (other values are possible) of a maximal flow through capacity of the continuously adjustable valve system.

Also the fine tuning continuously adjustable valve system may be controlled by the control system, also in particular based on the transfer fluid flow values as measured by the flow sensor system and/or based on the transfer fluid temperature values of the temperature sensor system during a charging operation and/or a discharging operation. Thereby, fine tuning may be enabled improving temperature control and/or flow rate control of the transfer fluid.

According to an embodiment of the present invention it is provided an electro-thermal energy storage system, comprising a heat storage for storing heat energy by transfer of heat from a heat transfer fluid; a heater flow path according to one of the preceding embodiments, wherein the heater system is adapted to heat the heat transfer fluid, a heater system outlet being connected to a heat storage discharge outlet; a fluid transportation actuator, having an outlet being connected or connectable to a heat storage discharge inlet and connected or connectable to a heater system inlet; a heat consumer flow path connected at a T-pipe junction connecting a heat storage discharge flow path and a downstream end of the heater line, a heat consumer flow path downstream end being connected to a fluid transportation actuator inlet.

It should be understood that features, individually or in any combination, disclosed, described, provided or applied to a heater flow path or to an electro-thermal energy storage system may also, individually or in any combination, applied for a method of manufacturing a heater flow path for an electro-thermal energy storage system, according to embodiments of the present invention and vice versa.

According to an embodiment of the present invention it is provided a method of manufacturing a heater flow path for an electro-thermal energy storage system, the method comprising providing a (e.g. electrical) heater system adapted to heat a heat transfer fluid; providing an on-off valve system; and providing a continuously adjustable valve system; and arranging the on-off valve system and the continuously adjustable valve system, according to a (intended) flow direction of the transfer fluid, both upstream, both downstream or one upstream and the other downstream of the heater system, such that the on-off valve system and the continuously adjustable valve system are capable to adapt a throughput of the transfer fluid through the heater system.

### Brief Description of the Drawings

Embodiments of the present invention are now described with reference to the accompanying drawings. The invention is not restricted to the illustrated or described embodiments.
Figs. 1 to 5 schematically illustrate a heater flow path for an electro-thermal energy storage system according to different embodiments of the present invention;
Figs. 6 and 7 schematically illustrate an electro-thermal energy storage system according to an embodiment of the present invention, in a charging operational mode as well as in a discharging operational mode, respectively.

### Detailed Description

The illustration in the drawings is in schematic form. It is noted that in different figures, elements similar or identical in structure and/or function are provided with the same reference signs or with reference signs, which differ only within the first digit. A description of an element not described in one embodiment may be taken from a description of this element with respect to another embodiment.

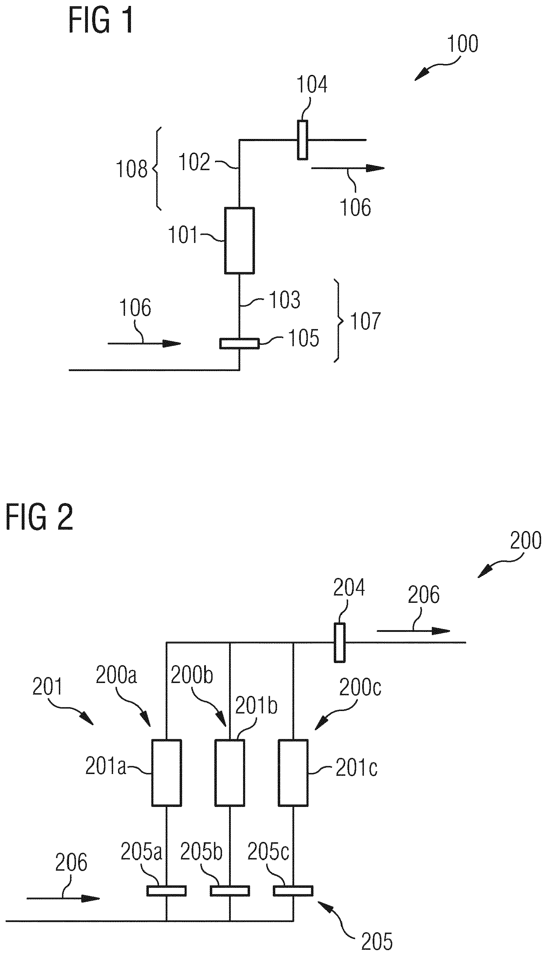

The heater flow path 100 for an electro-thermal energy storage system as schematically illustrated in **Fig.** 1 comprises an electrical heater system 101 which is adapted to heat a heat transfer fluid which may be guided in one or more pipe sections 102, 103 comprised in the heater flow path 100. In other embodiments the heater system may have any other heat source different from an electrical heating system. The heater flow path 100 further comprises an on-off valve system 104 and a continuously adjustable valve system 105. Thereby, the on-off valve system 104 and the continuously adjustable valve system 105 are configured to adapt a throughput of the transfer fluid (indicated with arrow 106 indicating the flow direction of the transfer fluid) through the heater system 101 and they are further arranged according to an intended flow direction 106 of the transfer fluid, both upstream, i.e. in a region 107 or downstream, i.e. in a region 108, or one upstream (i.e. in region 107) and one downstream (i.e. in region 108) of the heater system 101.

In the embodiment as illustrated in Fig. 1, the on-off valve system 104 is arranged downstream of the heater system 101. Furthermore, in the embodiment illustrated in Fig. 1, the continuously adjustable valve system 105 is arranged upstream of the heater system, according to the flow direction 106 of the transfer fluid.

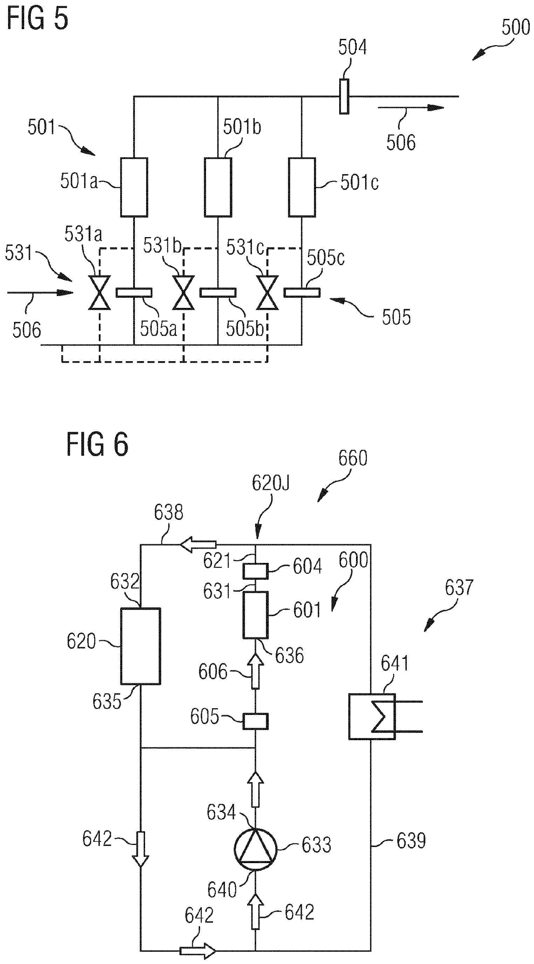

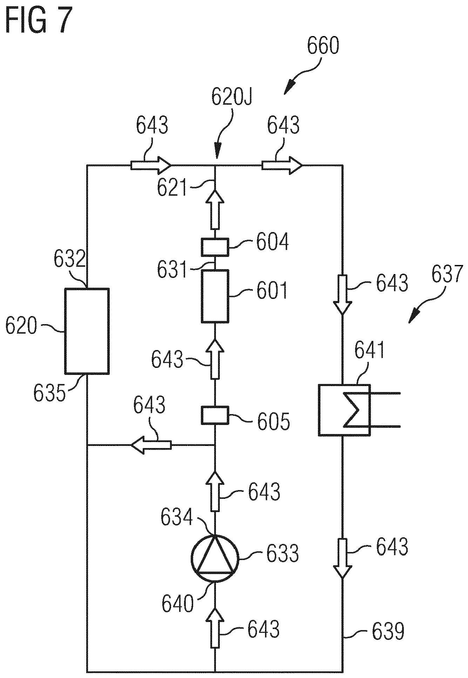

It is noted that the flow direction 106 of the heat transfer fluid as indicated in Fig. 1 applies in both a charging operational mode as well as discharging operational mode of an electro-thermal energy storage system, such as is illustrated in Figs. 6 and 7.

The flow path 200 schematically illustrated in **Fig. 2** comprises plural electrical heater units 201a, 201b, 201c (and possibly further heater units not illustrated) which are arranged in parallel heater unit flow paths 200a, 200b, 200c collectively together with the on-off valve system 204 and the continuously adjustable valve system 205 forming the heater flow path 200. The continuously adjustable valve system 205 comprises plural continuously adjustable valves 205a, 205b, 205c which are arranged in the respective heater unit flow paths 201a, 201b, 201c and are arranged upstream the respective heater units 201a, 201b, 201c. Further, the on-off valve system 204 is implemented as a single on-off valve as is the on-off valve system 104 illustrated in Fig. 1.

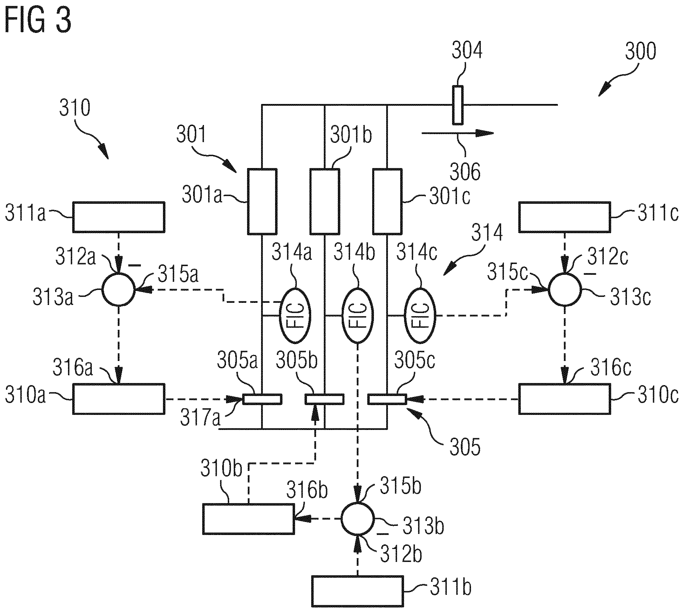

The heater flow path 300 schematically illustrated in **Fig. 3** further comprises a control system 310 which in the present embodiment comprises controller portions 310a, 310b, 310c including set point definition modules 311a, 311b, 311c which provide respective transfer fluid flow reference values 312a, 312b, 312c, and including respective difference elements 313a, 313b, 313c, respectively. Furthermore, the heater flow path 300 comprises a flow sensor system 314 comprising individual flow sensors 314a, 314b, 314c which are adapted to measure a transfer fluid flow value downstream the continuously adjustable valve system 305 which comprises the continuously adjustable valves 305a, 305b, 305c, connected in parallel in the plural heater unit flow paths 300a, 300b, 300c in which also the plural electrical heater units 301a, 301b, 301c are connected in parallel. Additionally or alternatively, one or more temperature sensors may be provided downstream the heating system und their measurement results may be utilized for controlling one or more valves.

The embodiment as illustrated in Fig. 3 is configured to set the on-off valve system (comprising for example a single on-off valve 304) into an on-state and to adjust the continuously adjustable valve system either to a maximal throughput or to adjust the continuously adjustable valve system 305 based on a difference of at least one measured transfer fluid flow value 315a, 315b, 315c as measured by the flow sensor system 314, and at least one transfer fluid flow reference value 312a, 312b, 312c. Thereby, in particular, a difference 316a, 316b, 316c of the measured transfer fluid flow value 315a, 315b, 315c and the transfer fluid flow reference value 311a, 311b, 311c, is supplied to the respective controller portion 310a, 310b, 310c which calculates based on the respective difference an individual control signal 317a, 317b, 317c which is supplied to the respective continuously adjustable valve 305a, 305b, 305c, respectively. Fig. 3 thereby illustrates the control during a charging operational mode of an electro-thermal energy storage.

It should be understood that the control procedure illustrated in Fig. 3 and/or Fig. 4 and/or Fig. 5 may be applied also in the other embodiments as illustrated in Figs. 1 and 2 and also in the embodiments illustrated in Figs. 3, 4 and 5 and may in particular be applied to the electro-thermal energy storage system as illustrated in Figs. 6 and 7.

The portion 450 of an electro-thermal energy storage system comprises a heater flow path 400 according to an embodiment of the present invention and illustrates a control during discharging operation. Herein, a portion 418 of a heat storage discharge flow path is indicated wherein transfer fluid 419 coming from a heat storage during a discharging operation runs or flows. A heat storage 420 may be arranged upstream of the heat storage discharge flow path 418. The portion 450 of the electro-thermal energy storage system further comprises a T-pipe junction 420J which is arranged downstream of the heater system 401 and which is also arranged downstream of the on-off valve system 404 and is connecting a downstream end 421 of the heater flow path 400 to the heat storage discharge flow path 418.

The portion 450 of the system further comprises a temperature sensor system 422 which is adapted to measure a transfer fluid temperature value 423, wherein the temperature sensor system is adapted to measure the transfer fluid temperature value at a measurement position 424 which is arranged downstream of the T-pipe junction 420J.

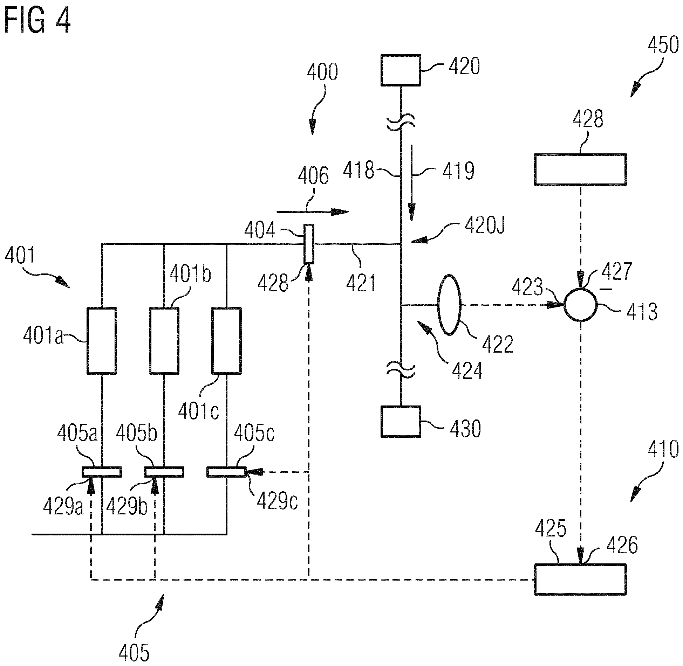

In the embodiment illustrated in Fig. 4, the controller 410 (which might comprise similar control modules as is illustrated in Fig. 3) further comprises a control portion 425 which receives a difference value 426 between the transfer fluid temperature value 423 and a transfer fluid temperature reference value 427 which is provided by a set point defining module 428 and supplied to the difference element 413. The control portion 425 may set, using a control signal 428, the state of the on-off valve system 404, in particular to an on-state and is also configured to adjust the continuously adjustable valve system 405 based on the difference 426 of the measured transfer fluid temperature value 423 and the transfer fluid temperature reference value 427, in particular, using control signals 429a, 429b, 429c, which are supplied to the individual continuously adjustable valves 405a, 405b, 405c.

For example, the control portion 425 may set the continuously adjustable valves 405a, 405b into a closed state and may set the continuously adjustable valve 429c to a particular opening degree such as to achieve an actual transfer fluid temperature value 423 at the position 424 essentially corresponding or being equal to the reference transfer fluid temperature value 427.

A heat consuming portion or heat consumer 430 may be arranged downstream the measurement point 424.

The heater flow path 500 schematically illustrated in **Fig. 5** additionally comprises a fine tuning continuously adjustable valve system 531 which is implemented in the illustrated embodiment as plural fine tuning continuously adjustable valves 531a,b,c which are arranged in parallel to the continuously adjustable valve system 505 which also comprises the individual continuously adjustable valves 505a,b,c.

**Figs. 6** **and** 7 schematically illustrate an electro-thermal energy storage system 660 according to an embodiment of the present invention in a charging operational mode and a discharging operational mode, respectively.

Thereby, the system 660 comprises a heat storage 620 for storing heat energy by transfer of heat from a heat transfer fluid. The system 660 further comprises a heater flow path 600 which may be configured as one of the embodiments as illustrated in Figs. 1 to 5. Thereby, a heater system outlet 631 is connected to the heat storage discharge outlet 632. The system 660 further comprises a fluid transportation actuator 633 having an outlet 634 being connected or connectable to a heat storage discharge inlet 635 and connected to a heater system inlet 636. The system 660 further comprises a heat consumer flow path 637 which is connected at a T-pipe junction 620J, wherein the T-pipe junction connects a heat storage discharge flow path 638 and a downstream end 621 of the heater line 600. Thereby, a heat consumer flow path downstream end 639 is connected to a fluid transportation actuator inlet 640. The heat consumer flow path 637 comprises at least one heat consumer 641.

Figs. 6 and 7 also illustrate the on-off valve system 604 which is arranged downstream of the heater system 601 as well as the continuously adjustable valve system 605 which is arranged upstream of the heater system 601 according to the flow direction 606 of the heat transfer fluid. The arrows 642 in Fig. 6 illustrate the flow direction or movement of the heat transfer fluid during the charging operational mode. In pipe sections where no arrows 642 are indicated, no transfer fluid or only a small amount of fluid flows.

**Fig. 7** illustrates the system 660 during a discharging operation, wherein the flow of transfer fluid is indicated by the arrows 643 which apply to the discharging operation.

The system 660 as illustrated in Fig. 6 or 7 may also be manufactured according to an embodiment of the present invention. Also the heater flow path as illustrated in any of Figs. 1 to 7 may be manufactured according to an embodiment of the present invention as explained above.

In the embodiment 200 illustrated in Fig. 2, there are three heaters, each equipped with a control damper upstream and one common shut-off damper downstream. During charging, the control dampers may be used to achieve a desired flow distribution between the individual heaters 201a,b,c. The control dampers 205a,b,c may also be completely closed in order to isolate individual heaters, for example in the case of a part load operation or malfunction in one of the heaters. During discharge, the control dampers 205a,b,c may be used to control the bypass mass flow. It is either possible to distribute the bypass mass flow between two or all three paths or to use only one of the paths during discharge. Alternatively, during discharge the control dampers may be closed. The shut-off damper 204 may be used to completely close off the heater flow path if there is no required bypass flow during discharge. This may be the case when the temperature of the transfer fluid (for example air) leaving the storage (for example 620 illustrated in Fig. 6) equals or is below the required temperature at the heat consumer (for example 641 illustrated in Fig. 6). A bypass mass flow may be avoided in this case to not lower the temperature of the heat transfer fluid below the target value upon mixing.

The shut-off damper 204 may alternatively be positioned upstream the control dampers depending on the isolation requirements of the heaters. It may also be possible to position the control dampers downstream of the heaters. This may, however, result in much higher operating temperature for the control dampers.

The Figs. 3 and 4 schematically illustrate control loops for the charging and discharging operations, respectively. During charging, each control damper may be equipped with a controller and each of the heater paths may be equipped with a flow indicator controller 314a,b,c.

In the Fig. 4 illustrating the discharge operation, only one of the paths may be used for the bypass flow. Based on the temperature after mixing, i.e. the temperature 423 as measured at the measurement position 424, the temperature indicator controller may send a signal by which the controller adjusts the control damper as well as the shut-off damper. For charging as well as for discharging the signals from the FIC/TIC may be compared to the respective set points and measures are taken based on the discrepancy or error between the signals and the set point.

The embodiment as illustrated in Fig. 5 provides a secondary flow path upstream of the heaters and illustrated in dotted lines. A secondary flow path may be installed at each of the heater paths or a single path. A single path may also bypass all heaters 501 and may connect to a pipe downstream valve 504.

The control dampers are positioned in these secondary flow paths which are of a significantly smaller size than the main flow paths. Due to the smaller size, a precise control of the low volume flow in the bypass mode during discharging operations may become easier to achieve. During discharge, the control damper (e.g. 505a,b,c) upstream of the heaters may be closed so that the entire flow passes through the secondary flow paths (e.g. 531a,b,c).

It is possible to use multiple of the heater paths or to use only one heater path to control the bypass flow. During charging, the shut-off dampers may be opened and the secondary flow path may be used to adjust the volume flow through each heater in such a way as to reach an ideal flow distribution among the heaters.

The single shut-off damper positioned on the common path downstream of the heaters may serve the purposes of further reducing any leakage flows if the bypass flow is to be stopped entirely and to isolate the heaters. An operation without this shut-off damper may also be possible however. Various types of control dampers or shut-off dampers may be used, such as butterfly dampers, louver dampers, multi-louver dampers, split disk dampers, guillotine dampers and vain dampers or any combination of those. One system may include multiple types of dampers.

Some embodiments of the present invention may provide several advantages: The integration of a shut-off damper into the heater/bypass line may allow for a better isolation of this line when a bypass flow is to be avoided. The complexity of the system may also be reduced, since the volume flow may be adjusted by only one control damper compared to one control damper upstream and another control damper downstream of the heater as may conventionally be performed. The embodiments in which a secondary flow path is integrated into the system upstream of the heaters may allow for a more precise flow control in the discharging mode due to their smaller cross-section. The low bypass volume flow no longer has to be controlled by large control dampers designed for the much higher volume flows during charging. Instead, there are designated flow paths for both modes.

It should be noted that the term "comprising" does not exclude other elements or steps and "a" or "an" does not exclude a plurality. Also elements described in association with different embodiments may be combined. It should also be noted that reference signs in the claims should not be construed as limiting the scope of the claims.

## Claims

1. Heater flow path for a thermal energy storage system (100), the heater flow path comprising:
a, in particular electrical, heater system (101) adapted to heat a heat transfer fluid;
an on-off valve system (104); and
a continuously adjustable valve system (105),
wherein the on-off valve system and the continuously adjustable valve system are configured to adapt a throughput of the transfer fluid through the heater system and are arranged, according to a (intended) flow direction (106) of the transfer fluid, both upstream (107), both downstream (108) or one upstream and the other downstream of the heater system (101).

2. Heater flow path according to the preceding claim, wherein the on-off valve system is arranged downstream of the heater system.

3. Heater flow path according to any of the preceding claims, wherein the continuously adjustable valve system is arranged upstream of the heater system.

4. Heater flow path according to any of the preceding claims,
wherein the heater system (201) comprises plural, in particular electrical, heater units (201a,b,c) arranged in plural parallel heater unit flow paths (200a,b,c),
wherein the continuously adjustable valve system (205) comprises plural continuously adjustable valves (205a,b,c) arranged in the plural heater unit flow paths, in particular upstream of the respective heater units (201a,b,c).

5. Heater flow path according to any of the preceding claims,
wherein the on-off valve system is settable exclusively into either an off-state corresponding to a minimal projection area of a flow passage or an on-state corresponding to a maximal projection area of a flow passage,
the on-off valve system in particular comprising at least one valve flap that can be adjusted into two different angle settings relative to the flow direction and/or can be adjusted in two different lateral positions relative to the flow direction, in order to selectively achieve an open or a closed flow projection area.

6. Heater flow path according to any of the preceding claims,
wherein continuously adjustable valve system allows to continuously alter a size of a projection area of a flow passage for the transfer fluid,
the continuously adjustable valve system in particular comprising at least one valve flap that can be continuously adjusted regarding orientation and/or lateral position, to achieve a flow projection area adjustable substantially to any value between substantially 0% and substantially 100%.

7. Heater flow path according to any of the preceding claims, further comprising:
a control system (310, 310a,b,c), adapted to control the on-off valve system and/or the continuously adjustable valve system in different manners during a charging operation and a discharging operation.

8. Heater flow path according to any of the preceding claims, further comprising:
a flow sensor system (314, 314a,b,c), adapted to measure a transfer fluid flow value, in particular arranged downstream of the continuously adjustable valve system (305) and/or upstream of the heater system (301).

9. Heater flow path according to any of the two preceding claims, wherein the control system is adapted, during a charging operation:
to set the on-off valve system (304) to an on-state; and/or
to adjust the continuously adjustable valve system (305) to a maximal throughput; or to adjust the continuously adjustable valve system (305) based on, in particular a difference (316a,b,c) of, at least one measured transfer fluid flow value (315a,b,c) and at least one transfer fluid flow reference value (312a,b,c).

10. Heater flow path according to any of the preceding claims, further comprising:
a heat storage discharge flow path (418), arrangeable or arranged downstream, according to a flow direction (419) of the transfer fluid during a discharging operation, of a heat storage (420);
a T-pipe junction (420J), arranged downstream of the heater system (401) and downstream of the on-off valve system (404) and connecting a downstream end (421) of the heater flow path (400) to the heat storage discharge flow path (418) ;
a temperature sensor system (422), adapted to measure a transfer fluid temperature value (423), in particular arranged downstream (424) the T-pipe junction (420J).

11. Heater flow path according to the preceding claim, wherein the control system is adapted, during a discharging operation:
to set the on-off valve system into an on-state or an off-state, in particular depending on a difference (426) between a measured transfer fluid temperature value (423) and a transfer fluid temperature reference value (427); and/or
to adjust the continuously adjustable valve system based on, in particular a difference (426) of, a measured transfer fluid temperature value (423) and a transfer fluid temperature reference value (427).

12. Heater flow path according to any of the preceding claims, wherein,
if the heater system comprises plural, in particular electrical, heater units arranged in plural parallel heater unit flow paths and the continuously adjustable valve system comprises plural continuously adjustable valves arranged in the plural heater unit flow paths, in particular upstream of the respective heater units,
the control system is adapted to set the plural continuously adjustable valves into different states or same states to achieve a different or same flow through of the heat transfer fluid through the plural heater unit flow paths.

13. Heater flow path according to any of the preceding claims, further comprising:
a fine tuning continuously adjustable valve system (531) arranged in parallel to the continuously adjustable valve system, and in particular arranged upstream of or in parallel to the heater system,
the fine tuning continuously adjustable valve system having a smaller maximal flow through capacity than the continuously adjustable valve system,
the fine tuning continuously adjustable valve system in particular having a maximal flow through capacity between 0% and 10% of a maximal flow through capacity of the continuously adjustable valve system.

14. Thermal energy storage system (660), comprising:
a heat storage (620) for storing heat energy by transfer of heat from a heat transfer fluid;
a heater flow path (600) according to one of the preceding claims, wherein the heater system (601) is adapted to heat the heat transfer fluid, a heater system outlet (631) being connected to a heat storage discharge outlet (632);
a fluid transportation actuator (633), having an outlet (634) being connected or connectable to a heat storage discharge inlet (635) and connected or connectable to a heater system inlet (636);
a heat consumer flow path (637) connected at a T-pipe junction (620J) connecting a heat storage discharge flow path (638) and a downstream end (621) of the heater line (600), a heat consumer flow path downstream end (639) being connected to a fluid transportation actuator inlet (640).

15. Method of manufacturing a heater flow path (100) for a thermal energy storage system, the method comprising:
providing a, in particular electrical, heater system (101) adapted to heat a heat transfer fluid;
providing an on-off valve system (104); and
providing a continuously adjustable valve system (105); and
arranging the on-off valve system and the continuously adjustable valve system, according to a (intended) flow direction of the transfer fluid, both upstream, both downstream or one upstream and the other downstream of the heater system,
such that the on-off valve system and the continuously adjustable valve system are capable to adapt a throughput of the transfer fluid through the heater system.
